Europäisches Patentamt

European Patent Office

Office européen des brevets

(11) Veröffentlichungsnummer: **0 229 250**
B1

(12) **EUROPÄISCHE PATENTSCHRIFT**

(45) Veröffentlichungstag der Patentschrift:
26.09.90

(21) Anmeldenummer: 86115381.5

(22) Anmeldetag: 06.11.86

(51) Int. Cl.⁵: **B25B 23/00**, G01B 7/00

(54) Schrauber mit einer Messeinrichtung zur Bestimmung der translatorischen Bewegung.

(30) Priorität: 14.12.85 DE 3544323

(43) Veröffentlichungstag der Anmeldung:
22.07.87 Patentblatt 87/30

(45) Bekanntmachung des Hinweises auf die Patenterteilung:
26.09.90 Patentblatt 90/39

(84) Benannte Vertragsstaaten:
DE FR IT SE

(56) Entgegenhaltungen:
EP-A- 0 203 370
DE-A- 2 743 457
DE-A- 3 123 572
DE-A- 3 347 052
GB-A- 1 256 721

(73) Patentinhaber: **ROBERT BOSCH GMBH, Postfach 50,
D-7000 Stuttgart 1(DE)**

(72) Erfinder: **Dobler, Klaus, Dr.-Ing., Bettäckerstrasse 12,
D-7016 Gerlingen(DE)**
Erfinder: **Hachtel, Hansjörg, Dipl.-Ing., Buchenstrasse 4,
D-7251 Weissach(DE)**
Erfinder: **Roll, Karl, Ing. grad., Bosslerweg 2,
D-7022 Leinfelden(DE)**

## Beschreibung

### Stand der Technik

Die Erfindung geht aus von einem Schrauber mit einer Meßeinrichtung zur Bestimmung der translatorischen Bewegung nach der Gattung des Hauptanspruchs (siehe z.B. DE-A 2 743 457). Es sind Schrauber bekannt, bei denen die translatorische Bewegung des Schraubers mit Hilfe von Potentiometern und Schleifringen gemessen wird. Dabei arbeiten aber die Meßeinrichtungen nicht berührungsfrei. Sie bauen sehr aufwendig und sind störanfällig. Das Dokument EP-A 203 370 (Veröffentlichungstag 3. 12. 88, Stand der Technik gemäß Artikel 54 (3 EPÜ) offenbart einen Schrauber mit einer berührungsfrei arbeitenden Meßeinrichtung.

### Vorteile der Erfindung

Der erfindungsgemäße Schrauber mit den kennzeichnenden Merkmalen des Hauptanspruchs hat demgegenüber den Vorteil, daß der Aufbau der Meßeinrichtung einfach ist. Die Meßeinrichtung ist geschützt im Innern des Gehäuses angeordnet, ohne daß dabei eine Änderung am Außenaufbau des Gehäuses notwendig ist.

Ferner ist es auch möglich, die Meßeinrichtung in einem zusätzlichen Gehäuseteil des Schraubers anzuordnen. Dadurch ist die Meßeinrichtung leicht und jederzeit austauschbar und somit den gewünschten Anforderungen anpaßbar. Bei einer Ausbildung der Meßeinrichtung nach Anspruch 7 ist die Rotation der Keilwelle von der Bewegung der Meßeinrichtung entkoppelbar. Dadurch kann die translatorische Bewegung des Schraubers ohne Beeinflussung der Meßhülse durch die Rotation bestimmt werden. Ferner ist die Meßeinrichtung auch leicht austauschbar.

### Zeichnung

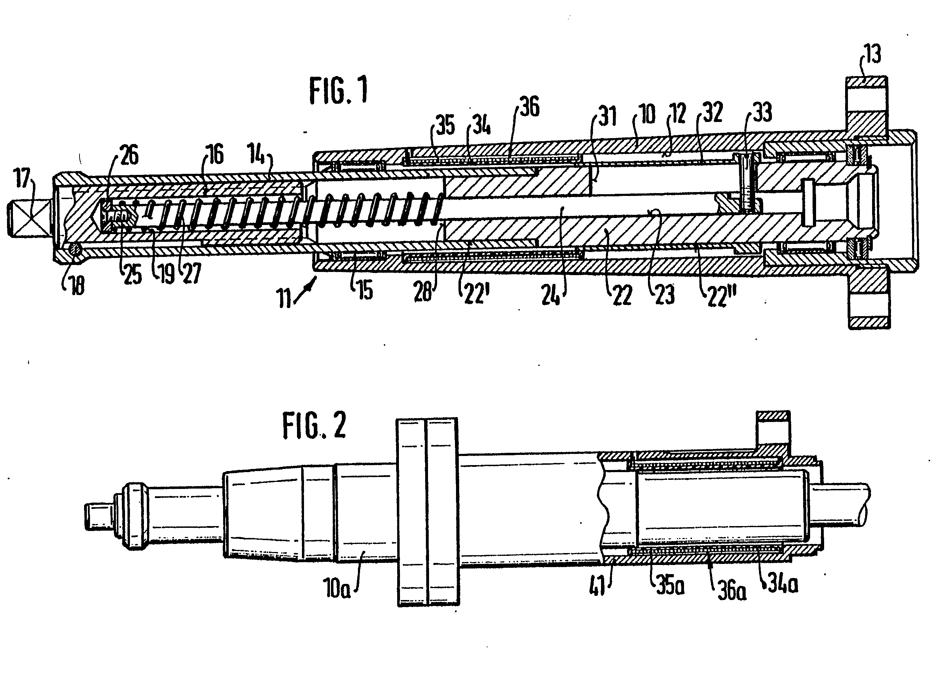

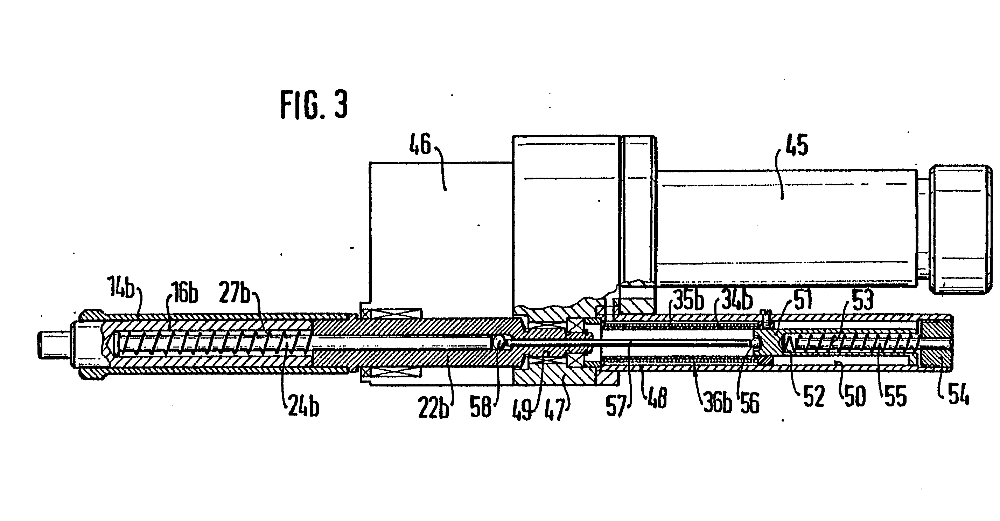

Ein Ausführungsbeispiel der Erfindung ist in der Zeichnung dargestellt und in der nachfolgenden Beschreibung näher erläutert. Est zeigen Figur 1 einen Längsschnitt durch eine Schrauberspindel, Figur 2 eine Abwandlung nach Figur 1 mit austauschbarer Meßeinrichtung und Figur 3 eine zweite Abwandlung nach Figur 1.

### Beschreibung des Ausführungsbeispiels

In der Figur 1 ist mit 10 das Gehäuse einer Schrauberspindel 11 bezeichnet, das eine durchgehende mittige Längsbohrung 12 aufweist. Mit Hilfe eines Flansches 13 kann an das Gehäuse 10 ein nicht dargestellter Elektro- oder Pneumatikmotor angebaut werden. In der Längsbohrung 12 ist eine Hohlwelle 14 angeordnet, die teilweise über das Gehäuse 10 hinausragt und mit Hilfe eines Kugellagers 15 in der dem Motor gegenüberliegenden Öffnung der Längsbohrung 12 reibungsarm gelagert ist. In die Hohlwelle 14 ist von der dem Motor abgewandten Seite her eine Schraubspindelkeilwelle 16 eingeschoben, deren Vierkant 17 zur Aufnahme eines Schraubwerkzeugs, mit dem die Keilwelle 16 an eine Schraube ein Drehmoment übertragen kann, über die Hohlwelle 14 hinausragt. Zusätzlich ist die axial verschiebbare Keilwelle 16 in der Öffnung der Hohlwelle 14 mit einem Stift 18 vor Ausschiebung aus der Hohlwelle 14 gesichert. Die Keilwelle 16 weist eine sich zum Motor hin öffnende Sackbohrung 19 auf.

Ferner ist in der Längsbohrung 12 des Gehäuses 10 eine Verlängerungswelle 22 angeordnet, die als Verbindung zwischen dem Motor und der Hohlwelle 14 dient. Die Verlängerungswelle 22 weist zwei Abschnitte 22', 22″ mit unterschiedlichen Durchmessern auf. Der Abschnitt 22' mit dem kleineren Durchmesser ragt in die Hohlwelle 14 hinein und ist mit dieser fest verbunden. Die Verlängerungswelle 22 weist eine durchgehende Längsbohrung 23 auf, die mit der Sackbohrung 19 der Keilwelle 16 achsgleich ist.

In der Längsbohrung 23 und in der Sackbohrung 19 befindet sich eine Verschiebestange 24, die an ihrem dem Boden der Keilwelle 16 zugewandten Ende eine mit Hilfe einer Schraube 25 befestigte Scheibe 26 aufweist. Die Scheibe 26 hat einen etwas kleineren Durchmesser als die Sackbohrung 19. An der Scheibe 26 liegt mit ihrem einen Ende eine Druckfeder 27 an, die sich mit ihrem anderen Ende an der Schulter 28 der Verlängerungswelle 22 anlegt.

Ferner weist die Verlängerungswelle 22 im Abschnitt 22″ ein Langloch 31 auf. Im Bereich des Langlochs 31 ist eine Meßhülse 32 angeordnet, die über eine im Langloch 31 geführte Schraube 33 mit der Verschiebestange 24 fest verbunden ist. Ferner ist an der Innenseite des Gehäuses 10 ortsfest auf einem Spulenträger 34 eine Spule 35 angeordnet. Der Spulenträger 34 befindet sich dabei etwa zwischen dem Ende des Langlochs 31 und der dem Motor abgewandten Öffnung der Längsbohrung 12 des Gehäuses 10. Die Meßspule 35 und die Meßhülse 32 bilden zusammen die Meßeinrichtung 36 zur Bestimmung der translatorischen Bewegung der Keilwelle 16. Dabei kann die Spule 35 einlagig gewickelt sein. Um eine exakte lineare Meßkurve zu erreichen, kann die Spule 35 auch am Anfang und am Ende gegenüber dem Mittelteil eine unterschiedliche Wicklungsanzahl aufweisen. Insbesondere sei hierbei auf die beiden Anmeldungen P 35 34 460.1 und P 35 11 490.8 hingewiesen.

Die Funktionsweise eines Schraubers ist bekannt und somit hier nicht näher beschrieben. Überträgt der Motor auf die Verlängerungswelle 22 und auf die fest mit dieser verbundenen Hohlwelle 14 ein Drehmoment, so wird die Schraube eingeschraubt und die Keilwelle 16 ausgefahren. Gleichzeitig wird durch die Kraft der Druckfeder 27 die Verschiebestange 24 entsprechend der translatorischen Bewegung der Keilwelle 16 verschoben. Da die Meßhülse 32 mit Hilfe der Schraube 33 fest mit der Verschiebestange 24 verbunden ist, wird somit die Meßhülse 32 in die Spule 35 entsprechend der translatorischen Bewegung der Keilwelle 16 hineinbewegt. Das Langloch 31 muß dabei mindestens die Länge der maximalen Ausfahrlänge der Keilwelle 16 aufweisen.

Meßspule 35 und Meßhülse 32 können dabei nach dem sogenannten Wirbelstrommeßverfahren arbeiten. Dabei muß die Meßhülse 32 aus metallischem Werkstoff bestehen. Werden die Meßspule 35 und die Meßhülse 32 relativ zueinander bewegt, so wird ein Meßsignal erzeugt, das proportional zur Eindringtiefe der Meßhülse 32 in die Meßspule 35 ist. Es verändert sich wegen des Wirbelstromeffekts der Wechselstromwiderstand der Meßspule.

Meßspule 35 und Meßhülse 32 können auch bei geeigneter Ausbildung nach dem induktiven Verfahren betrieben werden.

In Figur 2 ist eine Abwandlung des Ausführungsbeispiels nach Figur 1 dargestellt. Um einen Austausch des Meßsystems zu ermöglichen, ist zwischen dem Gehäuse 10a und dem Motor ein hohlzylinderförmiges Gehäuseteil 41 angeordnet. An dessen Innenwand ist wieder die Meßspule 35a mit dem Spulenkörper 34a ortsfest befestigt. Während im Ausführungsbeispiel nach Figur 1 die Meßspule 35 und die Meßhülse 32 so angeordnet sind, daß die Meßhülse 32 während des Meßvorgangs in die Meßspule 35 einfährt, ist in Figur 2 der umgekehrte Fall dargestellt. Selbstverständlich kann aber auch die Meßeinrichtung 36a entsprechend Figur 1 angeordnet werden. Aufgrund des austauschbaren Gehäuseteils 41 ist die Meßspule 35a leicht austauschbar und den jeweiligen Meßbedingungen anpaßbar. Ferner ist die Fertigung und der Zusammenbau des Schraubers 11 einfach.

Während bei den Ausführungsbeispielen nach Figur 1 und 2 die Meßhülse 32 gleichzeitig auch noch die rotierende Bewegung der Keilwelle 16 mit ausführt, ist beim Ausführungsbeispiel nach Figur 3 die rotierende Bewegung von der Meßhülse 32 entkoppelt. Der Motor und die Meßeinrichtung sind dabei nicht mehr achsgleich sondern nebeneinander angeordnet. Das Drehmoment des Motors 45 wird mit Hilfe eines nicht näher dargestellten Getriebes 46 auf die Verlängerungswelle 22b übertragen. An das Gehäuse des Getriebes 46 sind ein Übergangsteil 47 und ein Gehäuse 48 für die Meßeinrichtung 36b angeflanscht, die beide jeweils eine achsgleich zur Verlängerungswelle 16b verlaufende Bohrung 49 bzw. 50 aufweisen.

An der Innenwand des Gehäuses 48 der Meßeinrichtung 36b ist direkt an das Übergangsteil 47 anschließend der Spulenkörper 34b mit der Meßspule 35b ortsfest befestigt. Statt einer Meßhülse ist ein Meßbolzen 51 achsgleich zur Bohrung 50 im Gehäuse 48 angeordnet. Der Meßbolzen 51 weist eine Sackbohrung 52 auf, die zur der Verlängerungswelle 22b abgewandten Seite hin geöffnet ist. An den Boden der Sackbohrung 52 legt sich das Ende einer Druckfeder 53 an, deren anderes Ende am Abschlußteil 54 des Gehäuses 48 anliegt. Die Druckfeder 53 wird von einem Bolzen 55 geführt. Ferner befindet sich auf der dem Übergangsteil 47 zugewandten Seite des Bodens des Meßbolzens 51 eine Kugel 56, die mit einer Zwischenstange 57 mit einer zweiten, am Ende der Verschiebestange 24b angeordneten Kugel 58 in Wirkverbindung steht. Die beiden Kugeln 56, 58 dienen dazu, die rotierende und die translatorische Bewegung voneinander zu entkoppeln und nur die translatorische Bewegung der Keilwelle 16b auf den Meßbolzen 51 zu übertragen.

Überträgt der Motor 45 mit Hilfe des Getriebes 46 ein Drehmoment auf die Verlängerungswelle 22b und somit auf die Hohlwelle 14b, so fährt die Keilwelle 16b entsprechend dem Einschraubvorgang aus. Durch die Kraft der Druckfeder 27b wird die Verschiebestange 24b entsprechend der Bewegung der Keilwelle 16b nachgeführt. Gleichzeitig folgt aufgrund der Kraft der Druckfeder 53 der Meßbolzen 51 der translatorischen Bewegung der Verschiebestange 24b nach.

Auch beim Ausführungsbeispiel nach Figur 3 ist die Meßeinrichtung 36 leicht austauschbar.

## Patentansprüche

1. Schrauber (11) mit einer Meßeinrichtung (36) zur Bestimmung der translatorischen Bewegung einer von einem Motor angetriebenen Welle (16), wobei ein Meßwertaufnehmer (35) vorgesehen ist, der mit einem Meßelement (32) in Wirkverbindung steht, das an einem die translatorische Bewegung der Welle (16) mit ausführendem Bauteil (24) angeordnet ist, dadurch gekennzeichnet, daß die Welle (16) eine Bohrung (19) aufweist, in der als Bauteil eine Stange (24) angeordnet ist, die mit dem Meßelement (32) fest verbunden ist, und daß sich der Meßwertaufnehmer (35) und das Meßelement (32) relativ zueinander und entsprechend der translatorischen Bewegung der Welle (16) berührungsfrei bewegen.

2. Schrauber nach Anspruch 1, dadurch gekennzeichnet, daß die translatorische Bewegung der Welle (16) mit Hilfe des Wirbelstrommeßverfahrens bestimmt wird.

3. Schrauber nach Anspruch 1, dadurch gekennzeichnet, daß die translatorische Bewegung der Welle (16) mit Hilfe des induktiven Meßverfahrens bestimmt wird.

4. Schrauber nach einem der Ansprüche 1 bis 3, dadurch gekennzeichnet, daß der Meßwertaufnehmer (35) ortsfest in einem austauschbaren Gehäuseteil (41) angeordnet ist und das Meßelement (32) relativ zum Meßwertaufnehmer (35) bewegt wird.

5. Schrauber nach einem der Ansprüche 1 bis 4, dadurch gekennzeichnet, daß das Drehmoment des Motors auf die Welle (16) mit Hilfe eines Getriebes (46) zwischen der Welle (16) und der Meßvorrichtung (36) übertragen wird, das zwischen der Stange (24) und dem Meßelement (32) ein Zwischenstück (47) angeordnet ist, an dessen beiden Enden sich Kugeln (56, 58) befinden, und daß das Meßelement (32) durch die Kraft einer Feder (53) in Richtung der Stange (24) belastet ist, so daß das Meßelement (32) relativ zur ortsfest in einem Gehäuseteil (48) angeordneten Meßwertaufnehmer (35) bewegbar ist.

6. Schrauber nach einem der Ansprüche 1 bis 5, dadurch gekennzeichnet, daß das Meßelement eine Meßhülse (32) ist.

7. Schrauber nach einem der Ansprüche 1 bis 6, dadurch gekennzeichnet, daß der Meßwertaufnehmer eine Spule (35) ist.

## Claims

1. Screwdriver (11) having a measuring device (36) for determining the translatory movement of a shaft (16) driven by a motor, a transducer (35) being provided which is in operative connection with a measuring element (32) which is arranged on a component (24) which also performs the translatory movement of the shaft (16), characterized in that the shaft (16) has a bore (19) in which, as a component, a rod (24) is arranged which is firmly connected to the measuring element (32), and in that the transducer (35) and the measuring element (32) move in a non-contacting manner relative to one another and in accordance with the translatory movement of the shaft (16).

2. Screwdriver according to Claim 1, characterized in that the translatory movement of the shaft (16) is determined by means of the eddy-current measuring method.

3. Screwdriver according to Claim 1, characterized in that the translatory movement of the shaft (16) is determined by means of the inductive measuring method.

4. Screwdriver according to one of Claims 1 to 3, characterized in that the transducer (35) is arranged in a stationary position in an interchangeable housing part (41), and the measuring element (32) is moved relative to the transducer (35).

5. Screwdriver according to one of Claims 1 to 4, characterized in that the torque of the motor is transmitted to the shaft (16) by means of gearing (46) between the shaft (16) and the measuring device (36), which [sic] an intermediate piece (47) is arranged between the rod (24) and the measuring element (32), at both ends of which intermediate piece (47) balls (56, 58) are located, and in that the measuring element (32) is loaded in the direction of the rod (24) by the force of a spring (53) so that the measuring element (32) is moveable relative to the transducer (35) arranged in a stationary position in a housing part (48).

6. Screwdriver according to one of Claims 1 to 5, characterized in that the measuring element is a measuring sleeve (32).

7. Screwdriver according to one of Claims 1 to 6, characterized in that the transducer is a coil (35).

**Revendications**

1. Visseuse (11) avec un dispositif de mesure pour déterminer le déplacement de translation d'un arbre (16) entraîné par un moteur, un capteur (35) de valeur de mesure étant prévu, qui est en liaison opérationnelle avec un élément de mesure (32) disposé sur une partie constitutive (24) accompagnant le déplacement de translation de l'arbre (16), visseuse caractérisée en ce que l'arbre (16) comporte un alésage (19), dans lequel est disposée, en tant que pièce constitutive, une tige (24) qui est solidaire de l'élément de mesure (32), et en ce que le capteur (35) de valeur de mesure et l'élément de mesure (32) se déplacent relativement l'un par rapport à l'autre et de façon correspondante au déplacement de translation de l'arbre (16), sans contact entre eux.

2. Visseuse selon la revendication 1, caractérisée en ce que le déplacement de translation de l'arbre (16) est déterminé à l'aide du procédé de mesure par courants de Foucault.

3. Visseuse selon la revendication 1, caractérisée en ce que le déplacement de translation de l'arbre (16) est déterminé à l'aide du procédé de mesure par induction.

4. Visseuse selon une des revendications 1 à 3, caractérisée en ce que le capteur (35) de valeur de mesure est disposé à un emplacement fixe dans une partie remplaçable (41) du boîtier, et l'élément de mesure (32) est déplacé relativement par rapport au capteur (35) de valeur de mesure.

5. Visseuse selon une des revendications 1 à 4, caractérisée en ce que le couple du moteur est transmis à l'arbre (16) à l'aide d'une transmission (46) entre l'arbre (16) et le dispositif de mesure (36), une pièce intermédiaire (57) étant disposée entre la tige (24) et l'élément de mesure (32), pièce aux deux extrémités de laquelle se trouvent des billes (56, 58), tandis que l'élément de mesure est sollicité en direction de la tige (24) par l'action d'un ressort (53), de sorte que cet élément de mesure est susceptible de se déplacer, par rapport à un point fixe, dans un capteur (35) de valeur de mesure disposé dans une partie (48) du boîtier.

6. Visseuse selon une des revendications 1 à 5, caractérisée en ce que l'élément de mesure est une douille de mesure (32).

7. Visseuse selon une des revendications 1 à 6, caractérisée en ce que le capteur de valeur de mesure est une bobine (35).

FIG. 1

FIG. 2

FIG. 3

EP 0 229 250 B1